(19) Europäisches Patentamt
European Patent Office
Office européen des brevets

(11) EP 0 576 950 B1

(12) **EUROPÄISCHE PATENTSCHRIFT**

(45) Veröffentlichungstag und Bekanntmachung des Hinweises auf die Patenterteilung:
**26.03.1997 Patentblatt 1997/13**

(51) Int Cl.[6]: **C08L 55/02**, C08L 69/00, C08K 5/09

(21) Anmeldenummer: **93109873.5**

(22) Anmeldetag: **21.06.1993**

(54) **Thermoplastische Formmassen**

Thermoplastic moulding materials

Masses à mouler thermoplastiques

(84) Benannte Vertragsstaaten:
**BE DE ES FR GB IT NL**

(30) Priorität: **03.07.1992 DE 4221935**

(43) Veröffentlichungstag der Anmeldung:
**05.01.1994 Patentblatt 1994/01**

(73) Patentinhaber: **BAYER AG**
**51368 Leverkusen (DE)**

(72) Erfinder:
- **Eichenauer, Herbert, Dr.**
  **D-41539 Dormagen (DE)**
- **Ott, Karl-Heinz, Dr.**
  **D-51375 Leverkusen (DE)**
- **Pischtschan, Alfred, Dr.**
  **D-51515 Kürten (DE)**
- **Leitz, Edgar, Dr.**
  **D-41541 Dormagen (DE)**
- **Piejko, Karl-Erwin, Dr.**
  **D-51467 Bergisch Gladbach (DE)**

(56) Entgegenhaltungen:
**EP-A- 0 520 074**
**EP-A- 0 549 205**
**JP-A- 3 014 865**
**US-A- 4 299 929**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 576 950 B1

**Beschreibung**

Die Erfindung betrifft thermoplastische Formmassen aus ABS-Polymerisaten und aromatischen Polycarbonaten, ein Verfahren zu ihrer Herstellung und ihre Verwendung zur Herstellung von Formkörpern.

US-P 4,299,929 beschreibt eine thermoplastische Formmasse aus einem Polymeren A), welches durch Polymerisation von wenigstens 2 Monomeren ausgewählt aus der Gruppe der aromatischen Vinyl-Verbindungen, Vinylcyanid-Verbindungen und Carboxylsäurealkylester in der Gegenwart eines konjugierten Dienkautschuks und einem Polycarbonat B) im Gewichtsverhältnis von 10:90 bis 90:10 und 0,05 bis 5 Gew. Teile einer Säure-Verbindung c) ausgewählt aus anorganischen und organischen Säuren und organischen Säureanhydriden.

JP-A-3 014 865 sowie die gemäß Art. 54 (3) EPÜ nicht vorveröffentlichte EP-A 520 074 beschrieben eine thermoplastische Formmasse aus einem aromatischen Polycarbonat und gegebenenfalls weiteren thermoplastischen Harzen, Kaliumtitanat und einer organischen Säure.

Gemische aus ABS und Polycarbonat und ihre Verwendung als Formmassen sind bekannt. Sie enthalten im allgemeinen ABS-Harz, das z.B. aus einem Copolymerisat von Styrol und Acrylnitril und einem Pfropfcopolymerisat von Styrol und Acrylnitril auf einen Dienkautschuk wie z.B. Polybutadien zusammengesetzt ist und z.B. Polycarbonat auf Basis von Bisphenol A. Diese Formmassen zeichnen sich durch gute Zähigkeit sowohl bei Raumtemperatur als auch bei tiefen Temperaturen, gute Verarbeitbarkeit und eine hohe Wärmeformbeständigkeit aus.

Ein Nachteil derartiger Formmassen ist, daß zur Vermeidung schädlicher Auswirkungen auf das Polycarbonat und damit einhergehender Verschlechterungen der Eigenschaften bei der Herstellung immer ABS-Polymerisate eingesetzt werden müssen, die frei von basisch wirkenden Bestandteilen sind.

Aufgrund dieser Forderung mußte bisher immer ein speziell hergestelltes, beziehungsweise aufgearbeitetes ABS-Polymer, welches frei von basischen Bestandteilen ist, für die Verwendung in ABS/Polycarbonat-Mischungen bereitgestellt werden. ABS-Polymerisaten, die nicht von Anfang an für die Mischung mit Polycarbonaten vorgesehen sind, werden oft basische Additive zugesetzt (z.B. als Gleit- und Entformungsmittel). Dies gilt auch für ABS-Polymere, die anderen Polymeren, außer Polycarbonat, zugemischt werden. Solche ABS-Polymere oder ABS-Polymere, die über Recycling aus basischen Additiven enthaltenden Formmassen gewonnen werden, können daher nicht zur Herstellung von ABS/Polycarbonat-Mischungen verwendet werden.

Es wurde nun gefunden, daß durch Verwendung von speziellen Verbindungen mit mehreren Carboxylgruppen als Additivkomponente Mischungen aus aromatischen Polycarbonat-Harzen und basisch wirkende Additive enthaltenden ABS-Harzen hergestellt werden können, welche zu Formteilen mit guten Eigenschaften führen; dabei tritt auch keine Schädigung der Polycarbonatkomponente durch die sauren Verbindungen ein.

Außerdem sind die zugesetzten speziellen Verbindungen bereits in relativ geringen Zusatzmengen so wirksam, daß keine negativen Beeinflussungen wie z.B. erhöhte Flüchtigkeit oder stark erhöhte thermoplastische Fließfähigkeit eintreten.

Gegenstand der Erfindung sind thermoplastische Formmassen enthaltend

A) Harz vom ABS-Typ,
B) aromatische Polycarbonatharze,
C) eine mehrere Carboxylgruppen tragende Verbindung oder Gemische davon und gegebenenfalls
D) weitere Polymerharze,

dadurch gekennzeichnet, daß als Komponente A ein ABS-Harz mit mindestens einem basisch wirkenden Additiv eingesetzt wird, Komponente C ausgewählt ist aus Verbindungen mit einem Molekulargewicht von 150 bis 260, vorzugsweise 160 bis 230, und besonders bevorzugt 180 bis 220, die mindestens zwei Carboxylgruppen (-COOH) im Molekül aufweisen und das Gewichtsverhältnis von basisch wirkendem Additiv in A): Carboxylgruppen in C) einen Wert von 5:1 bis 1:1, vorzugsweise 4:1 bis 1:1 aufweist.

Die thermoplastischen Formmassen enthalten bevorzugt 50 bis 100 Gew.-Teile, besonders bevorzugt 60 bis 90 Gew.-Teile, insbesondere 70 bis 80 Gew.-Teile Komponente A, bevorzugt 1 bis 50 Gew.-Teile, besonders bevorzugt 5 bis 50 Gew.-Teile, insbesondere 10 bis 45 Gew.-Teile Komponente B und bevorzugt 0,2 bis 5 Gew.-Teile, besonders bevorzugt 0,25 bis 4 Gew.-Teile, insbesondere 0,3 bis 3 Gew.-Teile Komponente C.

Harze vom ABS-Typ (Komponente A) im Sinne der vorliegenden Erfindung enthalten 5 bis 100 Gew.-%, vorzugsweise 5 bis 80 Gew.-%, eines Pfropfpolymerisats und 95 bis 0 Gew.-%, vorzugsweise 95 bis 20 Gew.-%, eines thermoplastischen Copolymerharzes.

Pfropfpolymerisate sind solche, in denen auf einen Kautschuk Styrol oder Methylmethacrylat oder eine Mischung von 95 bis 50 Gew.-% Styrol, α-Methylstyrol, kernsubstituiertem Styrol, Methylmethacrylat oder Mischungen daraus und 5 bis 50 Gew.-% Acrylnitril, Methacrylnitril, Maleinsäureanhydrid, N-substituierte Maleinimide oder Mischungen daraus pfropfpolymerisiert sind. Geeignete Kautschuke sind praktisch alle Kautschuke mit Glasübergangstemperaturen ≤ 10°C, z.B. Polybutadien, Styrol-Butadien-Copolymerisate, Acrylnitril-Butadien-Copolymerisate, Polyisopren, Al-

kylacrylatkautschuke, vorzugsweise $C_1$-$C_8$-Alkylacrylatkautschuke, wie z.B. Poly-n-butylacrylat.

Die Alkylacrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Die Alkylacrylatkautschuke können weiterhin kleinere Mengen, vorzugsweise bis zu 5 Gew.-% (bezogen auf Kautschukgewicht) vernetzend wirkender ethylenisch ungesättigter Monomerer enthalten. Solche Vernetzer sind z.B. Alkylendiol-di-acrylate und -methacrylate, Polyesterdiacrylate und -methacrylate, Divinylbenzol, Trivinylbenzol, Triallylcyanurat, Allylacrylat und -methacrylat, Butadien oder Isopren.

Pfropfgrundlage können auch Acrylatkautschuke mit Kern/Mantel-Struktur sein mit einem Kern aus vernetztem Dienkautschuk aus einem oder mehreren konjugierten Dienen, wie Polybutadien, oder einem Copolymerisat eines konjugierten Diens mit einem ethylenisch ungesättigten Monomer wie Styrol und/oder Acrylnitril.

Weitere geeignete Kautschuke sind z.B. die sogenannten EPDM-Kautschuke (Polymerisate aus Ethylen, Propylen und einem nicht-konjugierten Dien wie z.B. Dicyclopentadien), EPM-Kautschuke (Ethylen/Propylen-Kautschuke) und Silikonkautschuke, die gegebenenfalls ebenfalls eine Kern/Schalen-Struktur aufweisen können. Bevorzugt sind Polybutadien und Alkylacrylatkautschuke.

Die Pfropfpolymerisate enthalten 10 bis 95 Gew.-%, insbesondere 20 bis 70 Gew.-%, Kautschuk und 90 bis 5 Gew.-%, insbesondere 80 bis 30 Gew.-% pfropfcopolymerisierte Monomere. Die Kautschuke liegen in diesen Pfropfcopolymerisaten in Form wenigstens partiell vernetzter Teilchen eines mittleren Teilchendurchmessers ($d_{50}$) von im allgemeinen 0,05 bis 20,0 µm, bevorzugt 0,1 bis 2,0 µm und besonders bevorzugt von 0,1 bis 0,8 µm vor.

Derartige Pfropfcopolymerisate können durch radikalische Pfropfcopolymerisation von Monomeren aus der Reihe Styrol, α-Methylstyrol, kernsubstituiertem Styrol, (Meth)Acrylnitril, Methylmethacrylat, Maleinsäureanhydrid, N-substituiertes Maleinimid in Gegenwart der zu pfropfenden Kautschuke hergestellt werden. Bevorzugte lungsverfahren für solche Pfropfcopolymerisate sind die Emulsions-, Lösungs-, Masse- oder Suspensionspolymerisation.

Die thermoplastischen Copolymerisate können aus den Pfropfmonomeren oder ähnlichen Monomeren aufgebaut sein, insbesondere aus wenigstens einem Monomeren aus der Reihe Styrol, α-Methylstyrol, Halogenstyrol, Acrylnitril, Methacrylnitril, Methylmethacrylat, säureanhydrid, Vinylacetat und N-substutiertes Maleinimid. Es handelt sich bevorzugt um Copolymerisate aus 95 bis 50 Gew.-% Styrol, α-Methylstyrol, Methylmethacrylat oder Mischungen daraus mit 5 bis 50 Gew.-% Acrylnitril, Methacrylnitril, Methylmethacrylat, Maleinsäureanhydrid oder Mischungen daraus.

Solche Copolymerisate entstehen auch bei der Pfropfcopolymerisation als Nebenprodukte. Es ist üblich, neben den im Pfropfpolymerisat enthaltenen Copolymeren noch getrennt hergestellte Copolymere zuzumischen. Diese müssen nicht mit den in den Pfropfpolymeren vorliegenden ungepfropften Harzanteilen chemisch identisch sein.

Geeignete getrennt hergestellte Copolymere sind harzartig, thermoplastisch und kautschukfrei; es sind insbesondere Copolymere aus Styrol und/oder α-Methylstyrol mit Acrylnitril, gegebenenfalls in Mischung mit Methylmethacrylat.

Besonders bevorzugte Copolymerisate bestehen aus 20 bis 40 Gew.-% Acrylnitril und 80 bis 60 Gew.-% Styrol oder α-Methylstyrol. Solche Copolymerisate sind bekannt und lassen sich insbesondere durch radikalische Polymerisation, insbesondere durch Emulsions-, Suspensions-, Lösungs- oder Massepolymerisation herstellen. Die Copolymerisate besitzen im allgemeinen mittlere Molekulargewichte ($\overline{M}w$) von 15.000 bis 200.000, vorzugsweise 50.000 bis 150.000.

Die ABS-Harze können sowohl einzeln als auch im Gemisch eingesetzt werden.

Erfindungsgemäß besonders geeignete ABS-Harze (Komponente A) mit mindestens einem basisch wirkenden Additiv sind solche Produkte, die bereits als reine ABS-Harze zu Formteilen verarbeitet wurden und als solche Teile bereits mindestens einen Benutzungszyklus durchlaufen haben, d.h. ABS-Harze, die durch Zurückgewinnung (Recycling) aus bereits benutzten Formteilen erhalten wurden, lassen sich auf diese Weise wiederverwenden.

Als basisch wirkende Additive, die in der ABS-Harz-Komponente enthalten sind, kommen in der Regel solche Verbindungen in Frage, die dem ABS-Harz zur Verbesserung seiner Eigenschaften (z.B. als Gleitmittel, als Entformungsmittel, als Antistatikum, als Stabilisator, als Lichtschutzmittel u.a.) zugesetzt wurden. In der Regel liegt der Anteil an basisch wirkendem Additiv bezogen auf das ABS-Harz bei 0,01 bis 5 Gew.-%, wobei der Anteil nach oben oder unten variiert werden kann. Vorzugsweise liegt der Anteil an basisch wirkendem Additiv bei 0,05 bis 3 Gew.-% bezogen auf ABS.

Beispiele für derartige Verbindungen sind Carbonsäure(di)amide z.B. Stearinsäureamid oder Ethylendiaminbisstearylamid, Metallsalze von langkettigen Carbonsäuren, z.B. Calciumstearat, ethoxylierte Fettamine, Fettsäureethanolamide, sterisch gehinderte Phenole, z.B. 2,4-Bis(n-octylthio)-6-(4-hydroxy-3,5-tert.-butylanilino)-1,3,5-triazin, sterisch gehinderte Amine, z.B. Sebacinsäure-bis-2,2,4,4-tetramethyl-4-piperidylester, Benzoltriazolderivate, z.B. 2-(2'-Hydroxy-5'-methylphenyl)benzotriazol.

Aromatische Polycarbonatharze (Komponente B) im Sinne der vorliegenden Erfindung können sowohl Homopolycarbonate als auch Copolycarbonate aus den Diphenolen der Formeln (I) und (II) sein

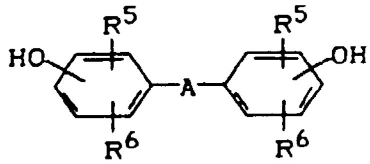

(I)

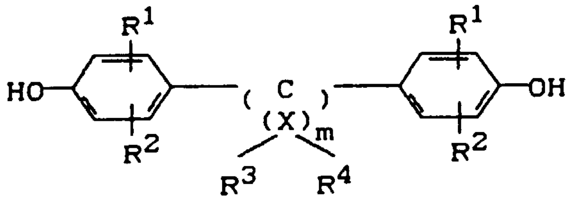

(II)

worin

| | |
|---|---|
| A | eine Einfachbindung, $C_1$-$C_5$-Alkylen, $C_2$-$C_5$-Alkyliden, $C_5$-$C_6$-Cycloalkyliden, -O-, -S-, oder $-SO_2-$ ist, |
| $R^5$ und $R^6$ | unabhängig voneinander für Wasserstoff, Methyl oder Halogen, insbesondere für Wasserstoff, Methyl, Chlor oder Brom stehen, |
| $R^1$ und $R^2$ | unabhängig voneinander Wasserstoff, Halogen, bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$-Aralkyl, bevorzugt Phenyl-$C_1$-$C_4$-alkyl, insbesondere Benzyl, bedeuten, |
| m | eine ganze Zahl von 4 bis 7, bevorzugt 4 oder 5, ist, |
| $R^3$ und $R^4$ | für jedes X individuell wählbar sind und unabhängig voneinander Wasserstoff oder $C_1$-$C_6$-Alkyl, vorzugsweise Methyl oder Ethyl, bedeuten und |
| X | Kohlenstoff bedeutet. |

Die Polycarbonate gemäß Komponente B können sowohl linear als auch verzweigt sein, sie können aromatisch gebundenes Halogen, vorzugsweise Brom und/oder Chlor enthalten, sie können aber auch frei von aromatisch gebundenem Halogen, also halogenfrei sein.

Die Polycarbonate B können sowohl einzeln als auch im Gemisch eingesetzt werden.

Die Diphenole der Formeln (I) und (II) sind entweder literaturbekannt oder nach literaturbekannten Verfahren herstellbar (siehe z.B. EP-A 0 359 953).

Die Herstellung der erfindungsgemäß geeigneten Polycarbonate gemäß Komponente B ist literaturbekannt und kann z.B. mit Phosgen nach dem Phasengrenzflächenverfahren oder mit Phosgen nach den Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Geeignete Kettenabbrecher sind z.B. Phenol oder p-tert.-Butylphenol, aber auch langkettige Alkylphenole wie 4-(1,3-Tetramethyl-butyl)phenol gemäß DE-OS 2 842 005 oder Monoalkylphenole oder Dialkylphenole mit insgesamt 8 bis 20 C-Atomen in den Alkylsubstituenten gemäß DE-OS 3 506 472, wie z.B. p-Nonylphenol, 2,5-di-tert.-Butylphenol, p-tert.-Octylphenol, p-Dodecylphenol, 2-(3,5-Dimethylheptyl)phenol und 4-(3,5-Dimethylheptyl)phenol. Die Menge an einzusetzenden Kettenabbrechern beträgt im allgemeinen zwischen 0,5 und 10 Mol-%, bezogen auf die Summe der jeweils eingesetzten Diphenole (I) und (II).

Die erfindungsgemäß geeigneten Polycarbonate gemäß Komponente B können in bekannter Weise verzweigt sein, und zwar vorzugsweise durch den Einbau von 0,05 bis 2,0 Mol-%, bezogen auf die Summe der eingesetzten Diphenole, an drei oder mehr als dreifunktionellen Verbindungen, z.B. solchen mit drei- oder mehr als drei phenolischen OH-Gruppen.

Sie haben mittlere Gewichtsmittelmolekulargewichte ($\overline{M}_w$ gemessen z.B. durch Ultrazentrifugation oder Streulichtmessung) von 10.000 bis 200.000, vorzugsweise von 20.000 bis 80.000.

Geeignete Diphenole der Formeln (I) und (II) sind z.B. Hydrochinon, Resorcin, 4,4'-Dihydroxydiphenyl,

2,2-Bis(4-hydroxyphenyl)-propan,
2,4-Bis(4-hydroxyphenyl)-2-methylbutan,
2,2-Bis(4-hydroxy-3,5-dimethylphenyl)-propan,
2,2-Bis(4-hydroxy-3,5-dichlorphenyl)-propan,
2,2-Bis(4-hydroxy-3,5-dibromphenyl)-propan,
1,1-Bis(4-hydroxyphenyl)-cyclohexan,
1,1-Bis(4-hydroxyphenyl)-3,3,5-trimethylcyclohexan,
1,1-Bis(4-hydroxyphenyl)-3,3-dimethylcyclohexan,
1,1-Bis(4-hydroxyphenyl)-3,3,5,5-tetramethylcyclohexan
oder
1,1-Bis(4-hydroxyphenyl)-2,4,4-trimethylcyclopentan.

Bevorzugte Diphenole der Formel (I) sind

2,2-Bis(4-hydroxyphenyl)-propan und
1,1-Bis(4-hydroxyphenyl)-cyclohexan.

Bevorzugtes Phenol der Formel (II) ist 1,1-Bis(4-hydroxyphenyl)-3,3,5-trimethylcyclohexan. Es können auch Mischungen von Diphenolen eingesetzt werden.

Erfindungsgemäß besonders geeignete Polycarbonatharze (Komponente B) sind solche Produkte, die (gegebenenfalls in Abmischung mit von basisch wirkenden Additiven freien ABS-Harzen) bereits zu Formteilen verarbeitet wurden und als solche Teile bereits mindestens einen Benutzungszyklus durchlaufen haben, d.h. Polycarbonat-Harze, die durch Zurückgewinnung (Recycling) aus bereits benutzten Formteilen erhalten wurden, lassen sich auf diese Weise zur Herstellung neuer Formteile wiederverwenden.

Geeignete Verbindungen mit mehreren Carboxylgruppen (Komponente C) sind vorzugsweise Verbindungen der Formeln (I), (II) und (III) sowie Hydroxypolycarbonsäuren und alkylsubstituierte Polycarbonsäuren.

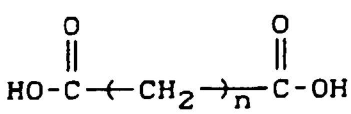 (I)

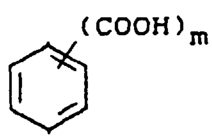 (II)

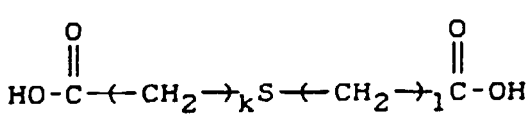 (III)

wobei

n = 5 bis 12
m = 2 bis 4
k, l = unabhängig voneinander 1,2 oder 3.

Beispiele für Verbindungen der Formel (I) sind Pimelinsäure, Korksäure, Azelainsäure, Sebacinsäure, 1,10-Decandicarbonsäure, 1,12-Dodecandicarbonsäure;

Beispiele für Verbindungen der Formel (II) sind Phthalsäure, Isophthalsäure, Terephthalsäure, Trimellitsäure (Benzol-1,2,4-tricarbonsäure), Trimesinsäure (Benzol-1,3,5-tricarbonsäure) und Pyromellitsäure (Benzol-1,2,4,5-tetracarbonsäure);

Beispiele für Verbindungen der Formel (III) sind 2,2'-Thiodiessigsäure und 3,3'-Thiodipropionsäure;

Beispiele für Hydroxypolycarbonsäuren sind Schleimsäure, Citronensäure; Beispiele für alkylsubstituierte Polycarbonsäuren sind Diethylmalonsäure, 3,3-Dimethylglutarsäure.

Bevorzugte Verbindungen gemäß Komponente C sind Azelainsäure, Sebacinsäure, Phthalsäure, Terephthalsäure, 2,2'-Thiodiessigsäure, Schleimsäure, Citronensäure und Diethylmalonsäure,

Gegebenenfalls können die erfindungsgemäßen thermoplastischen Formmassen weitere Polymerharze in geringen Anteilen, vorzugsweise unter 20 Gew.-%, besonders bevorzugt unter 10 Gew.-%, enthalten. Beispiele für weitere Polymerharze sind aromatische Polyester, z.B. Polyethylenterephthalat oder Polybutylenterephthalat, thermoplastische Polyurethane, Polyacrylate, z.B. Copolymerisate von (Meth)Acrylatmonomeren mit Acrylnitril oder Polyacetale, z.B. Polyoxymethylen, sowie Polyamide wie z.B. Polyamid 6 oder Polyamid 66.

Weiterhin können den erfindungsgemäßen Formmassen für ABS-Harze und Polycarbonatharze bekannte, vorzugsweise nicht basisch wirkende Zusätze wie z.B. Stabilisatoren, Pigmente, Entformungsmittel, Flammschutzmittel, Gleitmittel und Antistatika in den üblichen Mengen zugesetzt werden.

Die Vermischung der Polymerkomponenten zur Erzeugung der erfindungsgemäßen thermoplastischen Formmassen erfolgt in üblichen Mischaggregaten, so z.B. in Knetern, Innenmischern, auf Walzenstühlen, Schneckenmaschinen oder Extrudern, vorzugsweise oberhalb 200°C. Die Bestandteile können nacheinander oder gleichzeitig gemischt werden, vorzugsweise erfolgt zunächst eine Vermischung der Komponenten (A) und (C) und anschließend eine Vermischung des daraus resultierenden Gemisches mit der Komponente (B) und gegebenenfalls der Komponente (D).

Ein weiterer Gegenstand der Erfindung ist also ein Verfahren zur Herstellung der erfindungsgemäßen Formmassen durch Mischen der Bestandteile bei erhöhter Temperatur.

Die erfindungsgemäßen Formmassen können zur Herstellung von Formkörpern jeder Art, z.B. durch Spritzgießen oder Extrudieren verwendet werden. Beispiele für solche Formkörper sind Gehäuseteile, Abdeckplatten oder Automobilteile. Formkörper können auch durch Tiefziehen aus vorher hergestellten Platten oder Folien hergestellt werden. Ein weiterer Gegenstand der Erfindung ist demnach die Verwendung der beschriebenen Formmassen zur Herstellung von Formkörpern.

<u>Beispiele</u>

Eingesetzte Polymerisate:

A.1) ABS-Harz enthaltend

| | |
|---|---|
| 15 Gew.-Teile | eines Pfropfkautschuks aus 50 Gew.-% einer Polybutadiengrundlage mit einem mittleren Teilchendurchmesser ($d_{50}$) von 0,1 µm, auf die 36 Gew.-% Styrol und 14 Gew.-% Acrylnitril aufgepfropft wurden, |
| 15 Gew.-Teile | eines Pfropfkautschuks aus 50 Gew.-% einer Polybutadiengrundlage mit einem mittleren Teilchendurchmesser ($d_{50}$) von 0,4 µm, auf die 36 Gew.-% Styrol und 14 Gew.-% Acrylnitril aufgepfropft wurden, |
| 70 Gew.-Teile | eines Styrol/Acrylnitril = 72:28-Copolymerisats mit einem $\overline{M}_w$ von ca. 80.000 mit $\overline{M}_w/\overline{M}_n$ -1 ≤ 2 und |
| 2 Gew.-Teile | Ethylendiaminbisstearylamid, |

hergestellt durch Vermischen der Komponenten in einem Innenkneter.

A.2) ABS-Harz enthaltend

| | |
|---|---|
| 60 Gew.-Teile | eines Pfropfkautschuks aus 50 Gew.-% einer Polybutadiengrundlage mit einem mittleren Teilchendurchmesser ($d_{50}$) von 0,4 µm, auf die 36 Gew.-% Styrol und 14 Gew.-% Acrylnitril aufgepfropft wurden, |
| 40 Gew.-Teile | eines Styrol/Acrylnitril = 72:28-Copolymerisats mit einem $\overline{M}_w$ von ca. 80.000 mit $\overline{M}_w/\overline{M}_n$ -1 ≤ 2 und |
| 1 Gew.-Teil | eines Gemisches ethoxylierter Fettamine, |

hergestellt durch Vermischen der Komponenten in einem Innenkneter.

A.3) ABS-Harz enthaltend

| | |
|---|---|
| 15 Gew.-Teile | eines Pfropfkautschuks aus 50 Gew.-% einer Polybutadiengrundlage mit einem mittleren Teilchendurchmesser ($d_{50}$) von 0,1 µm, auf die 36 Gew.-% Styrol und 14 Gew.-% Acrylnitril aufgepfropft wurden, |
| 15 Gew.-Teile | eines Pfropfkautschuks aus 50 Gew.-% einer Polybutadiengrundlage mit einem mittleren Teilchendurchmesser ($d_{50}$) von 0,4 µm, auf die 36 Gew.-% Styrol und 14 Gew.-% Acrylnitril aufgepfropft wurden, |
| 40 Gew.-Teile | eines α-Methylstyrol/Acrylnitril = 72:28-Copolymerisats mit einem $\overline{M}_w$ von ca. 65.000 mit $\overline{M}_w/\overline{M}_n -1 \leq 2$ und |
| 30 Gew.-Teile | eines Styrol/Acrylnitril = 72:28-Copolymerisats mit einem $\overline{M}_w$ von ca. 80.000 mit $\overline{M}_w/\overline{M}_n -1 \leq 2$ und |
| 1 Gew.-Teil | Magnesiumstearat, |

hergestellt durch Vermischen der Komponenten in einem Innenkneter.

B.1) Aromatisches Polycarbonat aus 2,2-Bis-(4-hydroxyphenyl)-propan (Bisphenol A) mit einer relativen Viskosität von 1,26 (gemessen in $CH_2Cl_2$ bei 25°C in Form einer 0,5 Gew.-%igen Lösung), entsprechend einem $\overline{M}w$ von ca. 25 000.

C.1) Azelainsäure (MG: 188)

C.2) Phthalsäure (MG: 166)

C.3) Pyromellitsäure (MG: 254)

C.4) 2,2'-Thiodiessigsäure (MG: 150)

C.5) Citronensäure (MG: 192)

C.6) Schleimsäure (MG: 210)

Herstellung und Ausprüfung der Formmassen

Durch Abmischen der in Tabelle 1 angegebenen Gew.-Teile der oben beschriebenen Komponenten in einem Innenkneter bei ca. 200°C wurden Formmassen hergestellt, die anschließend bei 250°C zu Prüfkörpern verspritzt wurden. Die Kerbschlagzähigkeit wurde bei Raumtemperatur ($a_k^{RT}$) und bei -40°C ($a_k^{-40°C}$) nach ISO 180 A (Einheit kJ/$m^2$), die Schlagzähigkeit bei -40°C ($a_n^{-40°C}$) nach ISO 180 C (Einheit kJ/$m^2$), die Kugeldruckhärte ($H_c$) nach DIN 53456 (Einheit N/$mm^2$), die Wärmeformbeständigkeit (Vicat B) nach DIN 53460 (Einheit °C) gemessen.

Der Oberflächenglanz wurde an einer ebenen Platte gemäß DIN 67530 bei einem Reflektionswinkel von 60° (Reflektometerwert) mit Hilfe des Mehrwinkel-Reflektometers "Multi-Gloss" der Firma Byk-Mallinckrodt ermittelt (siehe Tabelle).

Wie aus den Beispielen zu erkennen ist, weisen die erfindungsgemäßen Formmassen im Vergleich zu den Formmassen ohne Komponente C ein deutlich besseres Eigenschaftsbild auf, insbesondere eine Kombination aus hoher Zähigkeit (auch bei tiefer Temperatur) und guter Oberflächenbeschaffenheit auf bei gleich guter Wärmeformbeständigkeit (Vicat B) und Kugeldruckhärte ($H_c$).

Tabelle 1 Zusammensetzungen der Formmassen

| Formmasse | A.1 (Gew.-Teile) | A.2 (Gew.-Teile) | A.3 (Gew.-Teile) | B.1 (Gew.-Teile) | C.1 (Gew.-Teile) | C.2 (Gew.-Teile) | C.3 (Gew.-Teile) | C.4 (Gew.-Teile) | C.5 (Gew.-Teile) | C.6 (Gew.-Teile) | Gew.-Verhältnis (basisches Additiv in A): (Carboxylgruppen in C) |
|---|---|---|---|---|---|---|---|---|---|---|---|
| 1 | 50 | 27,5 | - | 22,5 | 1 | - | - | - | - | - | 2,66 |
| 2 | 50 | 27,5 | - | 22,5 | - | 1 | - | - | - | - | 2,35 |
| 3 | 50 | 27,5 | - | 22,5 | - | - | 1 | - | - | - | 1,80 |
| 4 | 50 | 27,5 | - | 22,5 | - | - | - | 1 | - | - | 2,13 |
| 5 | 50 | 27,5 | - | 22,5 | - | - | - | - | 1 | - | 1,81 |
| 6 | 50 | 27,5 | - | 22,5 | - | - | - | - | - | 1 | 2,97 |
| 7 (Vergleich) | 50 | 27,5 | - | 22,5 | - | - | - | - | - | - | - |
| 8 | - | 60 | - | 40 | - | 0,5 | - | - | - | - | 2,21 |
| 9 (Vergleich) | - | 60 | - | 40 | - | - | - | - | - | - | - |
| 10 | - | 37,5 | 37,5 | 25 | - | - | - | - | 0,5 | - | 2,13 |
| 11 | - | 37,5 | 37,5 | 25 | - | - | - | - | - | 0,5 | 3,50 |

<u>Tabelle 2</u> Prüfdaten der Formmassen

| Formmasse | $a_k^{RT}$ | $a_k^{-40^0 C}$ | $a_n^{-40^0 C}$ | $H_c$ | Vicat B | Reflektometerwert |
|---|---|---|---|---|---|---|
| 1 | 12 | 6 | 48 | 98 | 100 | 80 |
| 2 | 14 | 6 | 55 | 99 | 101 | 79 |
| 3 | 10 | 4 | 45 | 100 | 101 | 74 |
| 4 | 12 | 6 | 46 | 100 | 99 | 81 |
| 5 | 12 | 5 | 50 | 100 | 100 | 78 |
| 6 | 13 | 5 | 52 | 99 | 100 | 77 |
| 7 (Vergleich) | 2 | 2 | 12 | 100 | 99 | 55 |
| 8 | 22 | 7 | 99 | 99 | 106 | 77 |
| 9 (Vergleich) | 3 | 2 | 14 | 100 | 108 | 52 |
| 10 | 16 | 5 | 58 | 97 | 102 | 73 |
| 11 | 16 | 6 | 55 | 99 | 103 | 76 |

## Patentansprüche

1. Thermoplastische Formmassen enthaltend

   A) Harz vom ABS-Typ,
   B) aromatische Polycarbonatharze,
   C) eine mehrere Carboxylgruppen tragende Verbindung oder Gemische davon und gegebenenfalls
   D) weitere Polymerharze,

   dadurch gekennzeichnet, daß als Komponente A ein ABS-Harz mit mindestens einem basisch wirkenden Additiv eingesetzt wird, Komponente C ausgewählt ist aus Verbindungen mit einem Molekulargewicht von 150 bis 260, die mindestens zwei Carboxylgruppen (-COOH) im Molekül aufweisen und das Gewichtsverhältnis von basisch wirkendem Additiv in A: Carboxylgruppen in C einen Wert von 5:1 bis 1:1 aufweist.

2. Thermoplastische Formmassen nach Anspruch 1 enthaltend

   A) 50 bis 100 Gew.-Teile Harz vom ABS-Typ,
   B) 1 bis 50 Gew.-Teile aromatische Polycarbonatharze und
   C) 0,2 bis 5 Gew.-Teile eine Carboxylgruppen tragende Verbindung.

3. Thermoplastische Formmassen gemäß Anspruch 1 und 2, dadurch gekennzeichnet, daß als Komponente A ein ABS-Harz mit mindestens einem basisch wirkenden Additiv eingesetzt wird, Komponente C ausgewählt ist aus Verbindungen mit einem Molekulargewicht von 160 bis 230, die mindestens zwei Carboxylgruppen (-COOH) im Molekül aufweisen und das Gew.-Verhältnis (basisch wirkendes Additiv in A) : (Carboxylgruppen in C) einen Wert von 4:1 bis 1:1 aufweist.

4. Thermoplastische Formmassen gemäß Anspruch 1 enthaltend als aromatisches Polycarbonatharz Bisphenol A-Polycarbonat.

5. Thermoplastische Formmassen gemäß Anspruch 1 enthaltend als Komponenten A, B und gegebenenfalls D Polymere, die bereits zu Formteilen verarbeitet wurden und als solche Teile bereits mindestens einen Benutzungszyklus durchlaufen haben.

6. Thermoplastische Formmassen gemäß Anspruch 1, welche als Komponente D aromatische Polyester, thermoplastische Polyurethane, Polyacrylate, Polyacetale oder Polyamide enthalten.

7. Thermoplastische Formmassen gemäß Anspruch 1, welche Stabilistatoren, Pigmente, Entformungsmittel, Flammschutzmittel, Gleitmittel und/oder Antistatika als weitere Zusätze enthalten.

8. Verfahren zur Herstellung von thermoplastischen Formmassen gemäß Ansprüchen 1 und 2, dadurch gekennzeichnet, daß zunächst eine Vermischung der Komponenten (A) und (C) und anschließend eine Vermischung des daraus resultierenden Gemisches mit der Komponente (B) und gegebenenfalls der Komponente (D) jeweils bei erhöhter Temperatur erfolgt.

9. Verwendung von Verbindungen mit einem Molekulargewicht von 150 bis 260 gemäß Anspruch 1, die mindestens zwei Carboxylgruppen im Molekül aufweisen (Komponente C) zur Stabilisierung von Formmassen aus Harzen vom ABS-Typ, aromatischen Polycarbonatharzen, wobei das Harz vom ABS-Typ mindestens ein basisch wirkendes Additiv enthält und das Gewichtsverhältnis von basisch wirkendem Additiv zu Carboxylgruppen (in Komponente C) 5:1 bis 1:1 aufweist.

## Claims

1. Thermoplastic moulding compositions containing

   A) ABS type resin,
   B) aromatic polycarbonate resins,
   C) a compound bearing a plurality of carboxyl groups or mixtures thereof and optionally

D) further polymer resins,

characterised in that an ABS resin having at least one basically acting additive is utilised as component A, component C is selected from among compounds having a molecular weight of from 150 to 260 which exhibit at least two carboxyl groups (-COOH) in the molecule, and the ratio by weight of basically acting additive in A : carboxyl groups in C is from 5 : 1 to 1 : 1.

**2.** Thermoplastic moulding compositions according to Claim 1 containing

A) from 50 to 100 parts by weight of ABS type resin,
B) from 1 to 50 parts by weight of aromatic polycarbonate resins and
C) from 0.2 to 5 parts by weight of a compound bearing carboxyl groups.

**3.** Thermoplastic moulding compositions according to Claims 1 and 2, characterised in that an ABS resin having at least one basically acting additive is utilised as component A, component C is selected from among compounds having a molecular weight of from 160 to 230 which exhibit at least two carboxyl groups (-COOH) in the molecule, and the ratio by weight (basically acting additive in A) : (carboxyl groups in C) is from 4 : 1 to 1 : 1.

**4.** Thermoplastic moulding compositions according to Claim 1 containing bisphenol A polycarbonate as the aromatic polycarbonate resin.

**5.** Thermoplastic moulding compositions according to Claim 1 containing as components A, B and optionally D polymers which have already been processed into mouldings and have already passed through at least one cycle of use as such mouldings.

**6.** Thermoplastic moulding compositions according to Claim 1 which contain as component D aromatic polyesters, thermoplastic polyurethanes, polyacrylates, polyacetals or polyamides.

**7.** Thermoplastic moulding compositions according to Claim 1 which additionally contain stabilisers, pigments, mould release agents, flame retardants, lubricants and/or antistatic agents.

**8.** Process for the preparation of thermoplastic moulding compositions according to Claims 1 and 2,
characterised in that there take place, first, mixing of components (A) and (C) and, subsequently, mixing of the mixture resulting therefrom with component (B) and optionally component (D), in each case at a raised temperature.

**9.** Use of compounds having a molecular weight of from 150 to 260 according to Claim 1 which exhibit at least two carboxyl groups in the molecule (component C), for stabilising moulding compositions produced from ABS type resins, aromatic polycarbonate resins, wherein the ABS type resin contains at least one basically acting additive and the ratio by weight of basically acting additive to carboxyl groups (in component C) is from 5 : 1 to 1 : 1.

## Revendications

**1.** Matières à mouler thermoplastiques contenant

A) une résine du type ABS
B) une résine de polycarbonate aromatique,
C) un composé portant plusieurs groupes carboxyle ou un mélange de tels composés et le cas échant
D) d'autres résines polymères

caractérisées en ce que le composant A est une résine ABS qui contient au moins un additif basique, le composant C est choisi parmi les composés de poids moléculaire 150 à 620 qui contiennent au moins deux groupes carboxyle (-COOH) dans la molécule, et le rapport en poids entre l'additif basique contenu dans A et les groupes carboxyle de C va de 5:1 à 1:1.

**2.** Matières à mouler thermoplastiques selon revendication 1, contenant

A) 50 à 100 parties en poids d'une résine de type ABS,

B) 1 à 50 parties en poids d'une résine de polycarbonate aromatique et
C) 0,2 à 5 parties en poids d'un composé portant des groupes carboxyle.

**3.** Matières à mouler thermoplastiques selon les revendications 1 et 2, caractérisées en ce que le composant A est une résine ABS contenant au moins un additif basique, le composant C est choisi parmi les composés de poids moléculaire 160 à 230 qui contiennent au moins deux groupes carboxyles (-COOH) dans la molécule et le rapport en poids entre l'additif basique de A et les groupes carboxyle de C va de 4:1 à 1:1.

**4.** Matières à mouler thermoplastiques selon revendication 1, contenant en tant que résine de polycarbonate aromatique un polycarbonate du bisphénol A.

**5.** Matières à mouler thermoplastiques selon revendication 1, contenant en tant que composants A, B et le cas échéant D des polymères qui ont déjà été utilisés pour la fabrication de pièces et qui, sous cette forme, ont déjà traversé au moins un cycle d'utilisation.

**6.** Matières à mouler thermoplastiques selon revendication 1, contenant en tant que composant D un polyester aromatique, un polyuréthanne thermoplastique, un polyacrylate, un polyacétal ou un polyamide.

**7.** Matières à mouler thermoplastiques selon revendication 1, contenant supplémentaire de stabilisants, de pigments, d'agents de démoulage, d'agents à l'epreuve de la flamme, de produits auxiliaires fluidifiants, et/ou d'agents antistatiques.

**8.** Procédé de préparation des matières à mouler thermoplastiques selon revendications 1 et 2, caractérisé en ce que l'on forme d'abord un mélange des composants (A) et (C) et on ajoute, en mélangeant, le composant (B) et le cas échéant le composant (D), dans tous les cas à température élevée.

**9.** Utilisation des composés de poids moléculaire 150 à 260 selon revendication 1, contenant au moins deux groupes carboxyle dans la molécule (composants C) pour la stabilisation de matières à mouler consistant en résines du type ABS et résines de polycarbonates aromatiques, les résines de type ABS contenant au moins un additif basique et le rapport en poids entre l'additif basique et les groupes carboxyle (du composant C) allant de 5:1 à 1:1.